# EUROPÄISCHE PATENTSCHRIFT

(11) **EP 0 686 418 B1**
(45) Veröffentlichungstag und Bekanntmachung des Hinweises auf die Patenterteilung: **23.09.1998**
(21) Anmeldenummer: 95106205.8
(22) Anmeldetag: 25.04.1995
(51) Int. Cl.: B01D 29/23, B01D 29/52, B01D 29/96

(54) **Kerzenfiltervorrichtung für die Bierfiltration**
Filter candle device for bier filtration
Appareil à bougie filtrante pour le filtration de bière

(30) Priorität: 01.06.1994 DE 9408982 U
(43) Veröffentlichungstag der Anmeldung: 13.12.1995
(73) Patentinhaber: Anton Steinecker Maschinenfabrik GmbH, D-85318 Freising (DE)
(72) Erfinder: Redl, Simon, D-84072 Reichertshausen (DE)
(74) Vertreter: Grünecker, Kinkeldey, Stockmair & Schwanhäusser Anwaltssozietät

(56) Entgegenhaltungen:
- EP-A- 0 088 737
- DE-A- 2 735 351
- DE-C- 550 309

## Beschreibung

Die vorliegende Erfindung betrifft eine Kerzenfiltervorrichtung für die Bierfiltration, mit einem Filterbehälter, der einen im wesentlichen zylindrischen Filterkerzenaufnahmeraum und ein sich im wesentlichen konisch verjüngendes Auslaufteil aufweist und mit einer Trennstelle zum Öffnen des Filterbehälters insbesondere zum Ein- und Ausbau der Filterkerzen.

Um die Filterkerzen einer Kerzenfiltervorrichtung von unten auswechseln zu können ist es bekannt, einen unteren Teil des Filterbehälters zu verschwenken, wobei die Trennstelle im Übergangsbereich zwischen dem oberen Filterkerzenaufnahmeraum und einem sich nach unten anschließenden im wesentlichen konisch verjüngenden Auslaufteil angeordnet ist. Dies erfordert jedoch einen hohen Fertigungsaufwand, weil eine präzise abdichtende und gleichzeitig tragfähige Flanschverbindung mit relativ großem Durchmesser bereitgestellt werden muß. Hohe Herstellungskosten und eine lange Rüstzeit sind zudem durch eine große Anzahl über den Umfang der Flanschverbindung verteilte Schraubelemente gegeben. Ferner sind herkömmliche Kerzenfilter auf zwei zueinander gegenüberliegende Doppelbeinständer angewiesen, um eine Schwenkbarkeit des konischen Auslaufteils zu gewährleisten.

Es ist daher eine Aufgabe der vorliegenden Erfindung, eine Kerzenfiltervorrichtung der eingangs genannten Art anzugeben, derart, daß eine kostengünstigere Herstellung, eine vereinfachte Handhabung und eine hohe Standfestigkeit gewährleistet sind.

Diese Aufgabe wird erfindungsgemäß dadurch gelöst, daß die Trennstelle der Flanschverbindung in dem im wesentlichen konischen Auslaufteil angeordnet ist und daß die Höhe (B) der Trennstelle (18) vom Boden und der Durchmesser (T) an der Trennstelle (18) in einem Bereich derart liegen, daß ein Ein-und-Ausbau der Kerzen (8) möglich ist.

Dadurch ist die Flanschverbindung mit kleinerem Durchmesser und mit einer geringeren Anzahl von Verbindungselementen herstellbar, wodurch erhebliche Fertigungskosten eingespart werden können. Des weiteren vermindert sich die Rüstzeit, da am Flansch weniger Verbindungselemente zu öffnen und zu schließen sind.

In vorteilhafter Ausgestaltung der Erfindung ist die Höhe der Trennstelle vom Boden und der Durchmesser an der Trennstelle nahe an unteren Grenzwerten derart vorgesehen, daß ein Ein- und Ausbau der Kerzen noch möglich ist. Damit ist sichergestellt, daß der bewegbare untere Behälterteil so tief wie praktisch möglich am Filterbehälter angeordnet ist, so daß schräggestellte Kerzen unten gerade noch aus der Behälteröffnung herausgeführt und neue Kerzen eingesetzt werden können. Als Folge davon ist die mit hoher Präzision zu fertigende Flanschverbindung mit einem kleinstmöglichen Durchmesser herstellbar, und die zu bewegende Masse ist kleinstmöglich gehalten.

Bevorzugt beträgt der Abstand der Trennstelle vom Boden, etwa eine halbe Kerzenlänge und der Durchmesser der Behälteröffnung an der Trennstelle etwa ein Viertel der Kerzenlänge. Derartige Größenverhältnisse sind hinsichtlich einer möglichst tief angeordneten Flanschverbindung vor allem bei einem Kerzenfilter gegeben, der eine Behälterhöhe zwischen 4 und 5 Metern, einen Behälterdurchmesser zwischen 1 und 2 Meter im zylindrischen Abschnitt aufweist und dessen unterer sich konisch verjüngende Abschnitt einen Winkel von 50° bis 80° einschließt.

In weiterer vorteilhafter Ausgestaltung der Erfindung sind am Filterbehälter vier gleichmäßig über den Umfang verteilte Standfüße angeordnet. Somit ist nicht nur eine sehr einfache Konstruktion der Standfüße, sondern auch ein sehr standsicherer Kerzenfilter, bereitgestellt. Eine solche Standfußanordnung ist möglich, weil der Durchmesser des unteren Behälterteiles im Flanschbereich gehalten werden kann und deshalb die freie Ausschwenkbarkeit durch Standfüße nicht behindert.

In weiterer Ausgestaltung der Erfindung ist ein bewegliches unteres Behälterteil seitlich wegschwenkbar ausgebildet, so daß im verschwenkten Zustand die Behälteröffnung an der Trennstelle im wesentlichen offengelegt ist. Damit ist ein mit geringem Kraftaufwand durchführbarer Schwenkvorgang möglich, weil keinerlei Hebearbeit verrichtet werden muß. Dadurch, daß nach dem Wegschwenken die Behälteröffnung im wesentlichen offengelegt ist, kann eine Bedienungsperson in den Innenraum des Behälters mühelos einsteigen, um die Kerzen abzumontieren, schräg aus der Öffnung herauszuführen und neue Kerzen einzubauen.

In weiterer vorteilhafter Ausgestaltung der Erfindung ist eines der Verbindungselemente der Flanschverbindung als Schwenkachse vorgesehen. Als Folge des verringerten Gewichtes des beweglichen unteren Behälterteiles füllt somit eines der Verbindungselemente der Flanschverbindung eine weitere Funktion als Schwenkachse aus, während alle weiteren Verbindungselemente zum Verschwenken gelöst wurden.

In weiterer Ausgestaltung der Erfindung ist vorgesehen, daß das untere Behälterteil an dem seitlich benachbarten Standfuß vorbei und gegen dem zur Drehachse nächstliegenden Standfuß verschwenkbar ist. Damit ist der äußere Durchmesser der Flanschverbindung an der Trennstelle im Durchmesser klein genug, so daß der bewegliche untere Behälterteil an einem seitlich benachbarten Standfuß unbehindert vorbei gedreht werden kann und erst durch den zur Drehachse nächstliegenden Standfuß, vergleichbar mit einem Anschlag, an einem weiteren Ausschwenken gehindert wird.

Die Erfindung wird nachstehend anhand eines Ausführungsbeispieles und zugehöriger Zeichnungen näher erläutert. In diesen zeigen:
- Fig. 1: ein Längsschnitt eines Kerzenfilters nach einem Ausführungsbeispiel der Erfindung, und
- Fig. 2: schematisch einen Horizontalschnitt eines Kerzenfilters entlang der Linie II-II der Fig. 1.

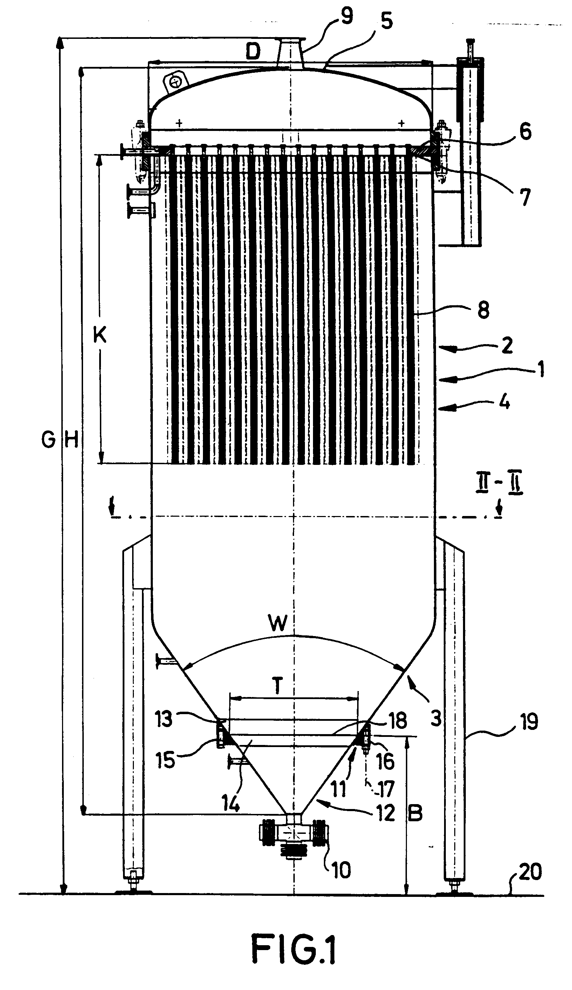

In der Fig. 1 ist ein Ausführungsbeispiel einer Kerzenfiltervorrichtung 1 dargestellt. Die Kerzenfiltervorrichtung 1 ist im wesentlichen aus einem Filterbehälter 2 gebildet, der wiederum einen Behälterdeckel 5, einen sich daran anschließenden im wesentlichen zylindrischen Filterkerzenaufnahmeraum 4 und im weiteren Verlauf nach unten ein sich im wesentlichen konisch verjüngendes Auslaufteil 3 aufweist. Oben am Behälterdeckel 5 und unten an der Mündung des Auslaufteiles 3 sind zentrale Ein- und Auslaßflansche 9, 10 ausgebildet. Seitlich am unteren Bereich des zylindrischen Behälterabschnitts sind gleichmäßig über den Umfang verteilte stab- oder rohrförmige Standfüße 19 befestigt, die auf einem Boden 20 stehen.

Zwischen dem Behälterdeckel 5 und dem Filterkerzenaufnahmeraum 4 ist eine mit Bohrungen versehene Trennwand 6 angeordnet. An jeder der über die Fläche der Trennwand 6 verteilten Vielzahl von Durchgangsöffnungen 7 ist nach unten eine stabförmige Kerze 8 als Filterelement befestigt. Über die Länge der Kerzen 8 hinaus ist der Filterkerzenaufnahmeraum 4 nach unten zunächst weiter zylindrisch ausgebildet.

Das im unteren Fortsatz anschließende im wesentlichen sich konisch verjüngende Auslaufteil 3 weist in seiner unteren Hälfte ein lösbares Behälterteil 12 auf, das nachfolgend als Konus 12 bezeichnet ist. Der feststehende Abschnitt des Auslaufteiles 3 ist mit dem lösbaren Konus 12 über eine Flanschverbindung 11 verbunden. Die Flanschverbindung 11 weist einen oberen Flanschring 13 am feststehenden Abschnitt des Auslaufteiles 3 auf, der nach unten mit der Trennstelle 18 bündig abschließt und dort in Eingriff steht mit dem unteren Flanschring 14 des Konus 12. Die Flanschringe 13, 14 sind am Umfang mit dem feststehenden Abschnitt des Auslaufteiles 3 und dem Konus 12 jeweilig verschweißt und ausgebildet als je eine Lochplatte zur Aufnahme von Schrauben 15, 16 am Umfang. Die Flanschringe 13, 14 sind nach innen dem konischen Verlauf des Auslaufteiles 3 angepaßt, so daß dieses inwandig nahezu übergangslos ausgebildet ist. Nach außen sind die Flanschringe 13, 14 mit gleichem Außendurchmesser, zylindrisch vom Auslaufteil 3 vorspringend ausgebildet. Zur Abdichtung ist zwischen den Flanschringen 13, 14 ein Dichtring in einer entsprechenden Rille im unteren Flanschring 14 (in der Zeichnung nicht dargestellt) eingesetzt. Der Konus 12 wird am Flansch des Auslaufteiles 3 durch mehrere, z.B. 16, über die Flanschringe 13, 14 am Umfang gleichmäßig verteilte Sechskantschrauben 15 gehalten. Um den Konus 12 am oberen Flanschring 13 zu befestigen, werden die Schrauben 15 durch eine Durchgangsbohrung im unteren Flanschring 14 hindurchgeführt und mit einem Sackgewinde im oberen Flanschring 13 in Eingriff gebracht.

Eines der unmittelbar einem Standfuß 19 benachbarten Verbindungselemente zwischen den Flanschringen 13, 14 weist eine Doppelfunktion zusätzlich als Schwenkachse 16 auf. Vergleichbar mit den Schrauben 15 greift ein Gewinde an der Schwenkachse 16 in einem oberen Gewindeabschnitt im oberen Flanschring 13 an. Im Bereich der Bohrung im unteren Flanschring 14 ist die Schwenkachse 16 im wesentlichen zylindrisch ohne ein Gewinde ausgebildet. Am unteren freiliegenden Ende der Schwenkachse 16 ist ein Gewindefortsatz vorgesehen, auf dem eine entsprechende Beilagscheibe und Mutter aufschraubbar sind. Durch ein geringfügiges Lösen dieser Mutter bleibt die Schwenkachse 16 somit unverändert mit dem oberen Flanschring 13 in Eingriff.

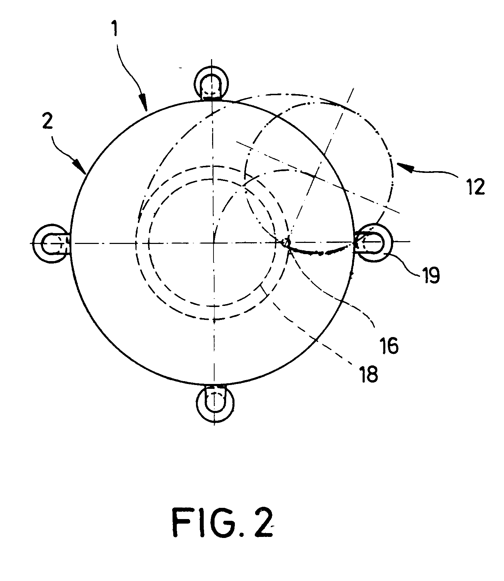

Wie aus Fig. 2 hervorgeht, ist, nachdem die Schrauben 15 ganz und die Mutter an der Schwenkachse 16 leicht gelöst wurden, der bewegliche Konus 12 seitlich um die Schwenkachse 16 verschwenkbar. Der Konus 12 bewegt sich dabei über die in Fig. 2 strichpunktierte äußere Linie nicht hinaus. Somit ist der Konus 12 am seitlich benachbarten Standfuß 19 ungehindert vorbeischwenkbar und wie mit der strichdoppelpunktierten Kreislinie gekennzeichneten Endverschwenkposition des Konus 12 ersichtlich, wird ein weiteres Drehen durch den zur Schwenkachse 16 nächstliegenden Standfuß 19 verhindert.

Überdies zeigt Fig. 2, daß der Filterbehälter 2 bei ausgeschwenktem Konus 12 eine im wesentlichen offenliegende Trennstelle 18 aufweist, so daß ein Einstieg einer Bedienungsperson in diese Öffnung und ein nachfolgender Einund Ausbau der Kerzen 8 mühelos durchführbar ist.

Gemäß dieser Ausführungsform ist, typischerweise ein Totalinhalt von etwa 6000 l bei einer Nutzlänge von etwa H = 4 m des Filterbehälters 2 und eine Gesamthöhe von etwa G = 5 m der Kerzenfiltervorrichtung 1 vorgesehen. Diesem Fassungsvermögen des Filterbehälters 2 entsprechend beträgt üblicherweise eine Höhe B der Trennstelle 18 annähernd B = 1 m, ein Durchmesser T an der Trennstelle 18 etwa T = 0,7 m, ein eingeschlossener Winkel W des konischen Auslaufteils 3 etwa W = 70°, die Kerzenlänge der Kerzen 8 etwa W = 1,7 m und ein Durchmesser D des zylindrischen Filterkerzenaufnahmeraumes 4 etwa D = 1,5 m.

## Patentansprüche

1. Kerzenfiltervorrichtung für die Bierfiltration,
mit einem Filterbehälter, der einen im wesentlichen zylindrischen Filterkerzenaufnahmeraum und ein sich im wesentlichen konisch verjüngendes Auslaufteil aufweist und mit einer Trennstelle zum Öffnen des Filterbehälters, insbesondere zum Ein- und Ausbau der Kerzen, **dadurch gekennzeichnet**, daß die Trennstelle (18) in dem im wesentlichen konischen Auslaufteil (3) angeordnet ist und daß die Höhe (B) der Trennstelle (18) vom Boden und der Durchmesser (T) an der Trennstelle (18) in einem Bereich derart liegen, daß ein Ein-und-Ausbau der Kerzen (8) möglich ist.

2. Kerzenfiltervorrichtung nach Anspruch 1, **dadurch gekennzeichnet**, daß die Höhe (B) der Trennstelle (18) vom Boden und der Durchmesser (T) an der Trennstelle (18) nahe an unteren Grenzwerten derart vorgesehen sind, daß ein Ein- und Ausbau der Kerzen (8) noch möglich ist.

3. Kerzenfiltervorrichtung nach Anspruch 2, **dadurch gekennzeichnet**, daß der Abstand (B) der Trennstelle vom Boden etwa eine halbe Kerzenlänge (K) und der Durchmesser (T) der Behälteröffnung an der Trennstelle (18) etwa ein Viertel der Kerzenlänge (K) beträgt.

4. Kerzenfiltervorrichtung nach Anspruch 1, **dadurch gekennzeichnet**, daß am Filterbehälter (2) vier gleichmäßig über den Umfang verteilte Standfüße (19) angeordnet sind.

5. Kerzenfilter nach mindestens einem der vorangegangenen Ansprüche 1 bis 4, **dadurch gekennzeichnet**, daß ein bewegliches unteres Behälterteil (12) seitlich wegschwenkbar ausgebildet ist und im verschwenkten Zustand die Behälteröffnung an der Trennstelle (18) im wesentlichen offenlegt.

6. Kerzenfilter nach Anspruch 5, **dadurch gekennzeichnet**, daß eines der Verbindungselemente (15,16) der Flanschverbindung (11) zwischen dem unteren Behälterteil (12) und dem oberen Behälterteil als Schwenkachse (17) vorgesehen ist.

7. Kerzenfilter nach Anspruch 5 oder 6, **dadurch gekennzeichnet**, daß das untere Behälterteil (12) an dem seitlich benachbarten Standfuß (19) vorbei und gegen dem zur Drehachse (17) nächstliegenden Standfuß (19) verschwenkbar ist.

## Claims

1. Candle filter device for beer filtration, having a filter container, which has an essentially cylindrical filter-candle-mounting space and an essentially conically narrowing discharge part, and a disconnecting point for opening the filter container, in particular for installing and removing the candles, characterized in that the disconnecting point (18) is arranged in the essentially conical discharge part (3), and in that the height (B) of the disconnecting point (18) from the floor and the diameter (T) of the disconnecting point (18) lie within such a range that installation and dismantling of the candles (8) is possible.

2. Candle filter device according to Claim 1, characterized in that the height (B) of the disconnecting point (18) from the floor and the diameter (T) of the disconnecting point (18) are provided close to lower limit values in such a way that installation and dismantling of the candles (8) is still possible.

3. Candle filter device according to Claim 2, characterized in that the distance (B) of the disconnecting point from the floor is about half the candle length (K), and the diameter (T) of the container opening at the disconnecting point (18) is about one-quarter of the candle length (K).

4. Candle filter device according to Claim 1, characterized in that four standing legs (19) distributed uniformly over the periphery are arranged on the filter container (2).

5. Candle filter according to at least one of the preceding Claims 1 to 4, characterized in that a movable lower container part (12) is designed so that it can be swung out of the way laterally, and, in the swung-away state, the container opening at the disconnecting point (18) is essentially open.

6. Candle filter according to Claim 5, characterized in that one of the connecting elements (15, 16) of the flange connection (11) between the lower container part (12) and the upper container part is provided as a pivot pin (16).

7. Candle filter according to Claim 5 or 6, characterized in that the lower container part (12) can be swung past the laterally adjacent standing leg (19) and can be swung against the standing leg (19) nearest the pivot axis (17).

## Revendications

1. Appareil de filtration à bougies pour la filtration de bière, comportant un récipient qui présente un espace à bougies filtrantes sensiblement cylindrique et une partie de sortie se rétrécissant de manière sensiblement conique, et un endroit de séparation pour l'ouverture de ce récipient, en particulier pour le montage et le démontage des bougies, caractérisé par le fait que l'endroit de séparation (18) est situé dans la partie de sortie sensiblement conique (3) et que la hauteur (B) de l'endroit de séparation (18) au-dessus du sol et le diamètre (T) à l'endroit de séparation (18) sont situés dans un domaine tel que le montage et le démontage des bougies (8) soient possibles.

2. Appareil de filtration à bougies selon la revendication 1, caractérisé par le fait que la hauteur (B) de l'endroit de séparation (18) au-dessus du sol et le diamètre (T) à l'endroit de séparation (18) sont prévus près de valeurs limites inférieures de façon telle que le montage et le démontage des bougies (8) soient encore possibles.

3. Appareil de filtration à bougies selon la revendication 2, caractérisé par le fait que la distance (B) entre l'endroit de séparation et le sol est à peu près égale à la moitié de la longueur (K) des bougies et le diamètre (T) de l'orifice du récipient à l'endroit de séparation (18) est à peu près égal au quart de la longueur (K) des bougies.

4. Appareil de filtration à bougies selon la revendication 1, caractérisé par le fait que sur le récipient (2) sont montés quatre pieds (19) également répartis sur la circonférence.

5. Filtre à bougies selon au moins une des revendications précédentes 1 à 4, caractérisé par le fait qu'une partie inférieure mobile (12) du récipient peut être écartée latéralement par pivotement et, à l'état écarté, découvre à peu près complètement l'orifice du récipient à l'endroit de séparation (18).

6. Filtre à bougies selon la revendication 5, caractérisé par le fait qu'un des éléments de jonction (15, 16) du raccord à brides (11) entre la partie inférieure (12) et la partie supérieure du récipient est prévu comme axe de pivotement (17).

7. Filtre à bougies selon l'une des revendications 5 et 6, caractérisé par le fait que la partie inférieure (12) du récipient peut pivoter devant le pied (19) voisin latéralement et vers le pied (19) le plus proche de l'axe de pivotement (17).
